(19) Europäisches Patentamt
European Patent Office
Office européen des brevets

(11) EP 0 658 604 B1

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(51) Int. Cl.$^7$: **C09B 47/30**, C09B 47/067

(21) Anmeldenummer: **94119478.9**

(22) Anmeldetag: **09.12.1994**

(54) **Verfahren zur Herstellung von metallfreien Phthalocyaninen**

Process for the production of metal-free phthalocyanines

Procédé de fabrication de phtalocyanines non métallisées

(84) Benannte Vertragsstaaten:
**CH DE FR GB IT LI**

(30) Priorität: **17.12.1993 DE 4343302**

(43) Veröffentlichungstag der Anmeldung:
**21.06.1995 Patentblatt 1995/25**

(73) Patentinhaber:
**BASF AKTIENGESELLSCHAFT**
**67056 Ludwigshafen (DE)**

(72) Erfinder:
- **Klopp, Ingo, Dr.**
  **D-67245 Lambsheim (DE)**
- **Böttcher, Peter, Dr.**
  **D-67112 Mutterstadt (DE)**
- **Frick, Ulrich, Dr.**
  **D-67373 Dudenhofen (DE)**
- **Schiller, Otto, Dr.**
  **D-67240 Bobenheim-Roxheim (DE)**

(56) Entgegenhaltungen:
**DE-C- 696 334**
**FR-A- 821 518**
**US-A- 2 485 168**

- **DATABASE WPI Section Ch, Week 8526 Derwent Publications Ltd., London, GB; Class E13, AN 85-155940 & JP-A-60 087 288 ( TOYO INK MFG KK) , 16.Mai 1985**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 658 604 B1

**Beschreibung**

Die vorliegende Erfindung betrifft ein neues Verfahren zur Herstellung von metallfreien Phthalocyaninen, die bis zu 16 Halogenatome, Cyanogruppen, Carboxylgruppen, Sulfogruppen, $C_1$-$C_{18}$-Alkylgruppen und/oder Arylreste als Substituenten tragen können, durch reduktive Cyclisierung von ortho-Phthalodinitril, substituierten ortho-Phthalodinitrilen oder deren Gemischen.

Metallfreie Phthalocyanine gewinnen zunehmendes Interesse als Pigmente für den blauen bis grünen Farbtonbereich.

Zur Herstellung von metallfreien Phthalocyaninen ausgehend von ortho-Phthalodinitrilen (o-PDN) sind eine ganze Reihe von Verfahren beschrieben, bei denen unterschiedliche Reduktionsmittel und Basen eingesetzt werden.

In der JP-A-60/087288 wird ein Verfahren zur Herstellung von metallfreien Phthalocyaninen beschriebed, bei dem Phthalodinitrile in einem organischen Lösungsmittel in Anwesenheit einer Base erhitzt werden. Aus der US-A-2 485 168 ist ein Herstellungsverfahren bekannt, bei dem o-PDN mit Ethylenglykol, Piperidin oder Chinolin sowie Kaliumcarbonat in Dichlorbenzol oder Cyclohexanol erhitzt wird.

In der DE-A-696 334 erfolgt die Synthese des metallfreien Phthalocyanins durch Zusammenschmelzen von o-PDN und Hydrochinon oder Glycerin oder durch Erhitzen der Reaktionspartner in Trichlorbenzol.

Diese Verfahren weisen jedoch verschiedene Nachteile auf: Die Realisierung eines Schmelzprozesses im großtechnischen Maßstab bereitet Schwierigkeiten, zudem wird das gewünschte Produkt nur in schlechten Ausbeuten erhalten. Bei Verwendung der die Umwelt belastenden Chlorbenzole als Lösungsmittel werden zusätzliche Maßnahmen zu ihrer vollständigen Entfernung aus dem Produkt und aus dem Abwasser erforderlich.

Bekanntermaßen bildet metallfreies Phthalocyanin verschiedene kristalline Phasen aus ("The Phthalocyanines", CRC Press Inc., 1983). In der Literatur werden die Modifikationen $\alpha$, $\beta$, X und $\pi$ ($\pi$ als Gemisch mit X-$H_2$Pc und $\pi$-CoPc; s. auch US-A-3 357 989, DE-A-22 18 788) und $\tau$ (Chem. Letters 1984, S. 2037-2040) beschrieben. In der nicht vorveröffentlichten DE-A 42 34 922 wird die $\gamma$-Modifikation strukturell charakterisiert: Röntgenpulverdiagramm (CuK$\alpha$) - 2$\theta$: 6.8, 7.4, 13.6, 14.9, 15.9, 16.9, 20.5, 22.4, 24.7, 26.2 und 27.8°.

Mit den bekannten Verfahren kann nur die $\beta$-Modifikation des metallfreien Phthalocyanins hergestellt werden. Ein Herstellungsverfahren, bei dem durch leichte Variation der Versuchsparameter verschiedene Modifikationen erhalten werden können, ist nicht bekannt.

Der Erfindung lag daher die Aufgabe zugrunde, den genannten Mängeln abzuhelfen und ein verfahrenstechnisch einfaches, wirtschaftliches Verfahren zur Herstellung von metallfreien Phthalocyaninen bereitzustellen, das auch die gezielte Synthese verschiedener Phthalocyaninmodifikationen ermöglicht.

Demgemäß wurde ein Verfahren zur Herstellung von metallfreien Phthalocyaninen, die bis zu 16 Halogenatome, Cyanogruppen, Carboxylgruppen, Sulfogruppen, $C_1$-$C_{18}$-Alkylgruppen und/oder Arylreste als Substituenten tragen können, durch reduktive Cyclisierung von ortho-Phthalodinitril, substituierten ortho-Phthalodinitrilen oder deren Gemischen gefunden, welches dadurch gekennzeichnet ist, daß man die Cyclisierung in $C_2$-$C_4$-Alkylenmono-, -oligo-, -polyglykolen, deren Mono-$C_1$-$C_8$-alkyl- oder -arylethern oder deren Mischungen in Gegenwart einer aromatischen Verbindung der allgemeinen Formel I

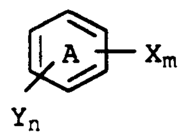

I

in der die Substituenten X gleich oder verschieden sein können und Hydroxy, Mercapto, Amino oder $C_1$-$C_6$-Alkylamino bedeuten, die Substituenten Y ebenfalls gleich oder verschieden sein können und Halogen, $C_1$-$C_6$-Alkyl, $C_1$-$C_6$-Alkoxy oder $C_1$-$C_6$-Alkoxycarbonyl bedeuten, m für 1 bis 4 und n für 0 bis 5 steht, wobei die Summe $m+n \leq 6$ ist und der Benzolring A an einen weiteren Benzolring anelliert sein kann,
und einer anorganischen Base vornimmt.

Das erfindungsgemäße Verfahren eignet sich zur Herstellung von metallfreien Phthalocyaninen, die in der Regel bis zu 16, vorzugsweise bis zu 4, gleiche oder verschiedene Substituenten tragen können.

Übliche Substituenten sind Halogen, insbesondere Brom und vor allem Chlor, Cyano, Carboxy, Sulfo, unverzweigtes oder verzweigtes $C_1$-$C_{18}$-Alkyl, insbesondere $C_1$-$C_6$-Alkyl, wie vor allem Methyl und Ethyl, sowie Aryl, vor allem Phenyl.

Besondere Bedeutung hat das erfindungsgemäße Verfahren jedoch für die Herstellung von nichtsubstituiertem metallfreien Phthalocyanin.

Als Reduktionsmittel werden beim erfindungsgemäßen Verfahren Glykole und Glykolmonoether sowie

deren Mischungen eingesetzt, die gleichzeitig auch als Lösungsmittel wirken, so daß auf die Verwendung weiterer, die Umwelt belastender Lösungsmittel verzichtet werden kann.

Geeignet sind dabei sowohl Mono- als auch Oligo- (insbesondere Di- und Tri-) und Poly-$C_2$-$C_4$-alkylenglykole (kurz "Glykole") sowie deren Mono-$C_1$-$C_8$-alkyl- und Monoarylether (kurz "Glykolmonoether"). Bevorzugt sind die auf Propylen und besonders bevorzugt die auf Ethylen basierenden Verbindungen.

Als Beispiele seien genannt: Ethylenglykol, 1,2- und 1,3-Propylenglykol, Butylenglykole, Di-, Tri- und Tetraethylen- und -propylenglykole, Polyethylen- und Polypropylenglykole, Ethylenglykolmonomethyl-, -ethyl-, -propyl-, -butyl- und -hexylether und Propylenglykolmonomethyl-, -ethyl-, -propyl-, -butyl- und -hexylether, Di-, Tri- und Tetraethylenglykolmonomethyl-, -ethyl- und -butylether und Di-, Tri- und Tetrapropylenglykolmonomethyl-, -ethyl- und -butylether sowie Ethylen- und Propylenglykolmonophenylether.

Die Menge an Reduktionsmittel (und damit auch Lösungsmittel) ist an sich nicht kritisch und wird zweckmäßig so gewählt, daß eine gut rührbare Pigmentsuspension vorliegt. In der Regel ist ein Gewichtsverhältnis von Lösungsmittel zu o-PDN von 20:1 bis 1:1 geeignet, bevorzugt ist ein Verhältnis von etwa 2:1.

Die aromatische Verbindung I wirkt als Redoxkatalysator. Geeignet sind hier Naphthalin und vor allem Benzol, die jeweils mindestens einen, bevorzugt zwei, aber auch bis zu vier der Substituenten X tragen: Amino, Mono-$C_1$-$C_6$-alkylamino, wie Monomethyl-, -ethyl-, butylamino, Mercapto und vor allem Hydroxy. Weiterhin können sie auch bis zu fünf Substituenten Y tragen: Halogen, wie Chlor und Brom, $C_1$-$C_6$-Alkyl, wie Methyl und Ethyl, $C_1$-$C_6$-Alkoxy, wie Methoxy und Ethoxy, und $C_1$-$C_6$-Alkoxycarbonyl, wie Methoxy- und Ethoxycarbonyl. Die Substituenten X und Y können dabei jeweils gleich oder verschieden sein, ihre Summe (m+n) soll $\leq 6$ sein.

Beispiele für geeignete Redoxkatalysatoren I sind: α- und vor allem β-Naphthol, 1,2-, 1,3- und 1,4-Phenylendiamin, 2-, 3- und 4-Aminophenol, o-, m- und p-Kresol (2-, 3- und 4-Methylphenol), bevorzugt Phenol, die Trihydroxybenzole Pyrogallol (1,2,3) und Phloroglucin (1,3,5) und besonders bevorzugt die Dihydroxybenzole Brenzkatechin (1,2), Resorcin (1,3) und vor allem Hydrochinon (1,4). Selbstverständlich können auch Mischungen dieser Verbindungen eingesetzt werden.

Die Menge an Redoxkatalysator I beträgt im allgemeinen 1 bis 25, bevorzugt 2 bis 15 und besonders bevorzugt 2 bis 12 mol-%, bezogen auf o-PDN.

Als anorganische Base eignen sich insbesondere Alkalimetallhydroxide, -oxide und -carbonate sowie auch deren Mischungen. Bevorzugt sind dabei Kaliumoxid, -carbonat und vor allem -hydroxid, Lithiumoxid, -carbonat und vor allem -hydroxid und besonders Natriumoxid, -carbonat und vor allem -hydroxid.

Besonders zu bemerken ist dabei, daß das Alkalimetall beim erfindungsgemäßen Verfahren im Gegensatz zu vielen bekannten Herstellungsverfahren nicht in das Phthalocyanin eingebaut wird. In der Regel werden 1 bis 50, vorzugsweise 2 bis 25 mol-% anorganische Base, bezogen auf o-PDN, eingesetzt.

Die Reaktionstemperatur beträgt im allgemeinen 80 bis 200°C, bevorzugt 100 bis 200°C. Bei Verwendung von Natrium- oder Kaliumoxid, -carbonat oder -hydroxid ist der Temperaturbereich von 140 bis 180°C besonders bevorzugt, bei Verwendung von Lithiumoxid, -carbonat oder -hydroxid der Temperaturbereich von 100 bis 180°C.

In der Regel entsteht β-Phthalocyanin insbesondere in den Glykolmonoethern bei Temperaturen von 140 bis 180°C, vorzugsweise 160 bis 175°C.

Die Bildung von γ-Phthalocyanin hängt sowohl von der Art des Lösungsmittels als auch von der Reaktionstemperatur ab. So liegen geeignete Temperaturen bei Verwendung der Glykole in der Regel bei 100 bis 180°C, bevorzugt 140 bis 170°C, und bei Verwendung der Glykolmonoether im allgemeinen bei 100 bis 150°C, vorzugsweise 100 bis 140°C.

Durch Zusatz von Impfkristallen der β- oder X-Modifikation (üblicherweise 0,1 bis 2 mol-%, bez. auf o-PDN) kann β- bzw. X-Phthalocyanin erhalten werden. Zur Herstellung der X-Modifikation eignen sich dabei insbesondere die Glykolmonoether und Temperaturen von 140 bis 180°C, bevorzugt 150 bis 175°C.

Als Impfkristalle für die X-Modifikation können dabei Phthalocyaninkristalle zum Einsatz kommen, die analog zur US-A-3 357 989 oder auch nach dem erfindungsgemäßen Verfahren erhalten wurden.

Die Herstellung von π-Phthalocyanin kann ohne oder mit Zusatz von Impfkristallen der π-Modifikation erfolgen. Als anorganische Base werden bevorzugt Lithiumoxid und -carbonat und besonders bevorzugt Lithiumhydroxid eingesetzt. Die Umsetzung wird vorzugsweise in Glykolen bei Temperaturen von in der Regel 100 bis 180°C, bevorzugt 120 bis 160°C vorgenommen.

Das erfindungsgemäße Herstellungsverfahren bietet also die Möglichkeit, in einfacher Weise durch leichte Variation der Reaktionsparameter gezielt die jeweils gewünschte Modifikation von metallfreiem Phthalocyanin herzustellen.

Ein weiterer Vorteil des Verfahrens ist, daß man drucklos arbeiten kann.

Verfahrenstechnisch kann man beim erfindungsgemäßen Verfahren wie folgt vorgehen: o-PDN und Redoxkatalysator werden gegebenenfalls unter Erwärmen im Lösungsmittel gelöst. Anschließend werden (falls erforderlich) Impfkristalle und anorganische Base, gelöst im Lösungsmittel oder als Feststoff, zugegeben. Die Reaktionsmischung wird dann auf die gewünschte Reaktionstemperatur gebracht und so lange bei dieser Temperatur gehalten, bis o-PDN

quantitativ verbraucht ist, was im allgemeinen 15 min bis etwa 8 h dauert und von der Reaktionstemperatur abhängt.

Die Aufarbeitung des Reaktionsgemisches auf das Produkt kann, zweckmäßigerweise nach Abkühlen auf etwa 80 bis 100°C, durch Filtration, Waschen mit dem für die Reaktion verwendeten Lösungsmittel oder anderen Alkoholen wie Methanol oder Ethanol und anschließend gewünschtenfalls mit Wasser und Trocknen erfolgen.

Mit Hilfe des erfindungsgemäßen Verfahrens können metallfreie Phthalocyanine in den gewünschten Modifikationen (β, γ-, X- und π-Modifikation) in hoher Reinheit (ohne Verunreinigung durch metallhaltige Phthalocyanine) und guter Ausbeute (bis 90 %) gezielt hergestellt werden. Von besonderem Vorteil sind auch die verfahrenstechnische Einfachheit und die Wirtschaftlichkeit des Verfahrens, da drucklos gearbeitet werden kann sowie kostengünstige Basen und Redoxkatalysatoren eingesetzt werden können und das Lösungsmittel regeneriert und für weitere Umsetzungen eingesetzt werden kann.

Beispiele

Herstellung von metallfreien Phthalocyaninen ($H_2$-Pc) der β-, γ-, X- und π-Modifikation

x g (gegebenenfalls anchloriertes) ortho-Phthalodinitril (o-PDN) und b g der aromatischen Verbindung I wurden unter Rühren in a g des Glykols G (nach Zugabe von y g Impfkristallen von X- oder π-Phthalocyanin, erhalten analog Beispiel 1 der US-A-3 357 989 (X) oder nach dem erfindungsgemäßen Verfahren (X bzw. π), im Fall der Herstellung von X- bzw. π-Phthalocyanin) auf $T_1$°C erhitzt. Nach Zugabe von c g der anorganischen Base Z, als Feststoff oder gelöst im Glykol G, wurde die Mischung noch t h auf $T_2$°C erhitzt.

Nach Abkühlen auf 80 bis 100°C wurde das Produkt abfiltriert, zunächst mit dem Glykol G und dann mit Wasser gewaschen und anschließend bei 80-100°C getrocknet.

Einzelheiten zu diesen Versuchen sowie deren Ergebnisse sind in der folgenden Tabelle zusammengestellt.

Dabei bedeuten:

BG ≙ Ethylenglykolmonobutylether
DG ≙ Diethylenglykol
TG ≙ Triethylenglykol
BDG ≙ Diethylenglykolmonobutylether
EDG ≙ Diethylenglykolmonoethylether
MDG ≙ Diethylenglykolmonomethylether
PE1 ≙ Polyethylenglykol vom mittleren Molekulargewicht 200
PE2 ≙ Polyethylenglykol vom mittleren Molekulargewicht 600
A ≙ Hydrochinon
B ≙ Phenol
C ≙ Resorcin
D ≙ Pyrogallol
E ≙ Phloroglucin

Tabelle

| Bsp. | x g o-PDN (Gew.-% Cl) | a g | Gly-kol G | b g | arom. Verb. I | y g $H_2Pc$-Impf-krist. | $T_1$ [°C] | c g | Base Z | $T_2$ [°C] | t [h] | Ausbeute [g]; Modifikation |
|---|---|---|---|---|---|---|---|---|---|---|---|---|
| 1 | 75 (-) | 265 | BG | 1 | A | - | 165 | 0,5 | NaOH | 170 | 4 | 55; β-$H_2Pc$ |
| 2 | 75 (-) | 265 | BG | 1 | A | - | 165 | 1,0 | NaOH | 170 | 4 | 59; β-$H_2Pc$ |
| 3 | 75 (-) | 265 | BG | 2 | A | - | 165 | 6,0 | NaOH | 170 | 4 | 55; β-$H_2Pc$ |
| 4 | 75 (-) | 265 | BG | 3 | A | - | 165 | 3,0 | NaOH | 170 | 4 | 61; β-$H_2Pc$ |
| 5 | 75 (-) | 265 | BG | 8 | A | - | 165 | 0,5 | NaOH | 170 | 4 | 59; β-$H_2Pc$ |
| 6 | 75 (-) | 265 | BG | 16 | A | - | 165 | 6,0 | NaOH | 170 | 4 | 58; β-$H_2Pc$ |
| 7 | 225 (-) | 470 | BG | 12,3 | A | - | 150 | 6,2 | NaOH | 165 | 3 | 198; β-$H_2Pc$ |
| 8 | 200 (-) | 270 | BG | 6,8 | A | - | 150 | 5,5 | NaOH | 175 | 3 | 156; β-$H_2Pc$ |
| 9 | 120 (-) | 240 | BG | 4,2 | B | - | 100 | 3,2 | NaOH | 160 | 4 | 75; β-$H_2Pc$ |
| 10 | 120 (-) | 240 | BG | 5 | C | - | 100 | 3,3 | NaOH | 160 | 4 | 84; β-$H_2Pc$ |
| 11 | 75 (-) | 265 | BG | 2 | A | - | 165 | 10,6 | $Na_2CO_3$ | 170 | 4 | 26; β-$H_2Pc$ |
| 12 | 75 (-) | 265 | BG | 4 | A | - | 165 | 6,9 | $K_2CO_3$ | 170 | 4 | 60; β-$H_2Pc$ |
| 13 | 130 (-) | 270 | BG | 7 | A | | 165 | 6,0 | $K_2CO_3$ | 170 | 4 | 112; β-$H_2Pc$ |
| 14 | 46,6 (-) + 3,4(30,7) | 180 | BG | 0,7 | A | - | 150 | 1,4 | NaOH | 155 | 5 | 35; β-$H_2Pc$ (1,8 Gew.-% Cl) |
| 15 | 46,3 (-) + 3,7(27,6) | 180 | BG | 0,7 | A | - | 150 | 1,4 | NaOH | 155 | 5 | 34; β-$H_2Pc$ (2,3 Gew.-% Cl) |

| Bsp. | x g o-PDN (Gew.-% Cl) | a g | Glykol G | b g | arom. Verb.I | y g $H_2Pc$-Impfkrist. | $T_1$ [°C] | c g | Base Z | $T_2$ [°C] | t [h] | Ausbeute [g]; Modifikation |
|---|---|---|---|---|---|---|---|---|---|---|---|---|
| 16 | 120 (-) | 300 | DG | 5 | A | - | 100 | 3,3 | NaOH | 120 | 4 | 82; γ-$H_2Pc$ |
| 17 | 120 (-) | 440 | DG | 5 | A | - | 100 | 3,3 | NaOH | 180 | 4 | 83; γ-$H_2Pc$ |
| 18 | 120 (-) | 240 | TG | 5 | A | - | 100 | 3,3 | NaOH | 140 | 4 | 86; γ-$H_2Pc$ |
| 19 | 120 (-) | 240 | TG | 5 | A | - | 100 | 3,3 | NaOH | 160 | 4 | 88; γ-$H_2Pc$ |
| 20 | 120 (-) | 440 | PE1 | 5 | A | - | 100 | 3,3 | NaOH | 160 | 4 | 89; γ-$H_2Pc$ |
| 21 | 120 (-) | 340 | PE2 | 5 | A | - | 100 | 3,3 | NaOH | 140 | 4 | 88; γ-$H_2Pc$ |
| 22 | 120 (-) | 240 | BG | 5 | A | - | 100 | 4,6 | KOH | 120 | 4 | 77; γ-$H_2Pc$ |
| 23 | 120 (-) | 240 | BDG | 5 | A | - | 100 | 3,3 | NaOH | 140 | 4 | 95; γ-$H_2Pc$ |
| 24 | 120 (-) | 290 | EDG | 5 | A | - | 100 | 3,3 | NaOH | 140 | 4 | 95; γ-$H_2Pc$ |
| 25 | 120 (-) | 240 | BG | 5 | A | - | 100 | 3,3 | NaOH | 160 | 4 | 102; β-$H_2Pc$ (95 %) |
| 26 | 120 (-) | 240 | MDG | 5 | A | - | 100 | 3,3 | NaOH | 180 | 4 | 99; β-$H_2Pc$ (93 %) |
| 27 | 120 (-) | 390 | EDG | 5 | A | - | 100 | 3,3 | NaOH | 180 | 4 | 99; β-$H_2Pc$ |
| 28 | 60 (-) | 200 | MDG | 2,5 | A | - | 120 | 2,3 | KOH (in 40 ml G) | 120 | 4 | 33; γ-$H_2Pc$ |
| 29 | 30 (-) | 200 | MDG | 1,3 | A | - | 160 | 1,2 | KOH (in 40 ml G) | 160 | 4 | 16; β-+γ-$H_2Pc$ |
| 30 | 120 (-) | 240 | MDG | 5 | A | 1,2; X | 100 | 3,3 | NaOH | 166 | 4 | 96; X-$H_2Pc$ |
| 31 | 120 (-) | 240 | MDG | 5 | A | 0,6; X | 100 | 3,3 | NaOH | 163 | 4 | 97; X-$H_2Pc$ |
| 32 | 120 (-) | 240 | MDG | 5 | A | 0,3; X | 100 | 3,3 | NaOH | 163 | 4 | 97; X-$H_2Pc$ |
| 33 | 120 (-) | 240 | BG | 5 | A | 2,4; X | 100 | 3,3 | NaOH | 160 | 4 | 101; X-$H_2Pc$ |

| Bsp. | x g o-PDN (Gew.-% Cl) | a g | Gly-kol G | b g | arom. Verb.I | y g $H_2Pc$-Impf-krist. | $T_1$ [°C] | c g | Base Z | $T_2$ [°C] | t [h] | Ausbeute [g]; Modifikation |
|---|---|---|---|---|---|---|---|---|---|---|---|---|
| 34 | 120 (-) | 240 | MDG | 5 | A | 2,4; X | 100 | 1,65 | KOH | 160 | 4 | 74; X-$H_2Pc$ |
| 35 | 120 (-) | 240 | MDG | 5 | A | 2,4; X | 100 | 3,3 | NaOH | 180 | 4 | 74; X-$H_2Pc$ |
| 36 | 120 (-) | 240 | BG | 5 | A | - | 100 | 2 | LiOH | 160 | 4 | 102; β-$H_2Pc$ |
| 37 | 120 (-) | 240 | BG | 5,7 | E | - | 100 | 2 | LiOH | 160 | 4 | 95; β-$H_2Pc$ |
| 38 | 120 (-) | 240 | BG | 5 | A | - | 100 | 2 | LiOH | 175 | 4 | 105; β-$H_2Pc$ |
| 39 | 120 (-) | 400 | DG | 5 | A | - | 100 | 2 | LiOH | 100 | 4 | 93; γ-$H_2Pc$ |
| 40 | 120 (-) | 400 | DG | 5 | A | - | 100 | 2 | LiOH | 120 | 4 | 98, γ-$H_2Pc$ |
| 41 | 120 (-) | 400 | DG | 5,7 | E | - | 100 | 2 | LiOH | 120 | 4 | 88; π-$H_2Pc$ |
| 42 | 120 (-) | 400 | DG | 5,7 | E | - | 100 | 2 | LiOH | 160 | 4 | 89; π-$H_2Pc$ |
| 43 | 120 (-) | 400 | DG | 5,7 | D | - | 100 | 2 | LiOH | 120 | 4 | 96; π-$H_2Pc$ |
| 44 | 120 (-) | 240 | MDG | 5 | A | - | 100 | 2 | LiOH | 120 | 4 | 47; π-+X-$H_2Pc$ |
| 45 | 120 (-) | 240 | MDG | 5 | A | - | 100 | 2 | LiOH | 160 | 4 | 94; π-+X-$H_2Pc$ |
| 46 | 120 (-) | 240 | MDG | 5,7 | D | - | 100 | 2 | LiOH | 160 | 4 | 76; X-$H_2Pc$ |
| 47 | 120 (-) | 400 | DG | 5 | A | 2,4; π | 100 | 2 | LiOH | 120 | 4 | 101; π-$H_2Pc$ |
| 48 | 120 (-) | 400 | DG | 5 | A | 2,4; π | 100 | 2 | LiOH | 160 | 4 | 100; π-$H_2Pc$ |
| 49 | 120 (-) | 400 | DG | 5,7 | D | 0,3; π | 100 | 2 | LiOH | 120 | 4 | 96; π-$H_2Pc$ |
| 50 | 120 (-) | 400 | DG | 5 | D | 0,3; π | 100 | 2 | LiOH | 160 | 4 | 96; π-$H_2Pc$ |

## Patentansprüche

1. Verfahren zur Herstellung von metallfreien Phthalocyaninen, die bis zu 16 Halogenatome, Cyanogruppen, Carboxylgruppen, Sulfogruppen, $C_1$-$C_{18}$-Alkylgruppen und/oder Arylreste als Substituenten tragen können, durch reduktive Cyclisierung von ortho-Phthalodinitril, substituierten ortho-Phthalodinitrilen oder deren Gemischen, dadurch gekennzeichnet, daß man die Cyclisierung in $C_2$-$C_4$-Alkylenmono-, -oligo-, -polyglykolen, deren Mono-$C_1$-$C_8$-alkyl- oder -arylethern oder deren Mischungen in Gegenwart einer aromatischen Verbindung der allgemeinen Formel I

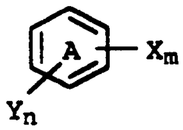

I

in der die Substituenten X gleich oder verschieden sein können und Hydroxy, Mercapto, Amino oder $C_1$-$C_6$-alkylamino bedeuten, die Substituenten Y ebenfalls gleich oder verschieden sein können und Halogen, $C_1$-$C_6$-Alkyl, $C_1$-$C_6$-Alkoxy oder $C_1$-$C_6$-Alkoxycarbonyl bedeuten, m für 1 bis 4 und n für 0 bis 5 steht, wobei die Summe $m+n \leq 6$ ist und der Benzolring A an einen weiteren Benzolring anelliert sein kann,
und einer anorganischen Base vornimmt.

2. Verfahren nach Anspruch 1, dadurch gekennzeichnet, daß man die Cyclisierung in $C_2$-$C_3$-Alkylenmono-, -oligo- oder -polyglykolen oder deren Mono-$C_1$-$C_4$-alkyl- oder -arylethern vornimmt.

3. Verfahren nach Anspruch 1 oder 2, dadurch gekennzeichnet, daß man als aromatische Verbindung (I) Hydroxybenzole einsetzt.

4. Verfahren nach den Ansprüchen 1 bis 3, dadurch gekennzeichnet, daß man als aromatische Verbindung (I) Dihydroxybenzole einsetzt.

5. Verfahren nach den Ansprechen 1 bis 4, dadurch gekennzeichnet, daß man als anorganische Base Alkalimetallhydroxide, -oxide, -carbonate oder deren Mischungen einsetzt.

6. Verfahren nach den Ansprüchen 1 bis 5, dadurch gekennzeichnet, daß man die Cyclisierung bei 80 bis 200°C vornimmt.

7. Verfahren nach den Ansprüchen 1 bis 6, dadurch gekennzeichnet, daß man es zur Herstellung von unsubstituiertem metallfreien Phthalocyanin anwendet.

## Claims

1. A process for preparing metal-free phthalocyanines which may carry up to 16 halogen atoms, cyano groups, carboxyl groups, sulfo groups, $C_1$—$C_{18}$-alkyl groups and/or aryl radicals as substituents by reductive cyclization of ortho-phthalodinitrile, substituted ortho-phthalodinitriles or mixtures thereof, which comprises effecting the cyclization in $C_2$—$C_4$-alkylene monoglycols, oligoglycols or polyglycols, their mono-$C_1$—$C_8$-alkyl or —aryl ethers or their mixtures in the presence of an aromatic compound of the general formula I

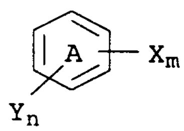

I

where the substituents X can be identical or different and each denotes hydroxyl, mercapto, amino or $C_1$—$C_6$-alkylamino, the substituents Y can likewise be identical or different and each denotes halogen, $C_1$—$C_6$-alkyl, $C_1$—$C_6$-alkoxy or $C_1$—$C_6$-alkoxycarbonyl, m is from 1 to 4 and n is from 0 to 5, subject to the proviso that $m+n \leq 6$ ,

and the benzene ring A can be fused to a further benzene ring,
and of an inorganic base.

**2.** A process as claimed in claim 1, wherein the cyclization is carried out in $C_2$—$C_3$-alkylene monoglycols, oligoglycols or polyglycols or their mono-$C_1$-$C_4$-alkyl or —aryl ethers.

**3.** A process as claimed in claim 1 or 2, wherein the aromatic compound (I) is a hydroxybenzene.

**4.** A process as claimed in any of claims 1 to 3, wherein the aromatic compound (I) is a dihydroxybenzene.

**5.** A process as claimed in any of claims 1 to 4, wherein the inorganic base used is an alkali metal hydroxide, oxide, carbonate or mixture thereof.

**6.** A process as claimed in any of claims 1 to 5, wherein the cyclization is carried out at from 80 to 200°C.

**7.** A process as claimed in any of claims 1 to 6, for preparing unsubstituted metal—free phthalocyanine.

**Revendications**

**1.** Procédé pour la production de phtalocyanines exemptes de métaux qui peuvent porter comme substituants, jusqu'à 16 atomes d'halogène, groupes cyano, groupes carboxyle, groupes sulfo, groupes alkyle en $C_1$-$C_{18}$ et/ou résidus aryle, au moyen d'une cyclisation réductrice de l'ortho-phtalodinitrile, des ortho-phtalodinitriles substitués ou de leurs mélanges, caractérisé en ce que l'on procède à la cyclisation dans des (alkylène en $C_2$-$C_4$)-mono-, -oligo-, -polyglycols, leurs mono-(alkyle en $C_1$-$C_8$)- ou -aryléthers ou leurs mélanges en présence d'un composé aromatique de formule générale I

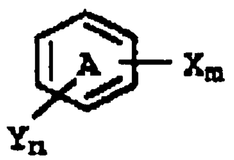

I

dans laquelle les substituants X peuvent être identiques ou différents et représentent des groupes hydroxy, mercapto, amino ou (alkyle en $C_1$-$C_6$)-amino, les substituants Y peuvent être identiques ou différents et représentent des groupes halogéno, alkyle en $C_1$-$C_6$, alcoxy en $C_1$-$C_6$ ou (alcoxy en $C_1$-$C_6$)-carbonyle, m vaut de 1 à 4 et n vaut de 0 à 5, la somme $m + n \leq 6$ et le noyau benzénique A peut être condensé sur un autre noyau benzénique,
et en présence d'une base inorganique.

**2.** Procédé selon la revendication 1, caractérisé en ce que l'on procède à la cyclisation dans des (alkylène en $C_2$-$C_3$)-mono-, -oligo-, ou -polyglycols, ou leurs mono-(alkyle en $C_1$-$C_4$)- ou -aryléthers.

**3.** Procédé selon la revendication 1 ou 2, caractérisé en ce que l'on met en oeuvre des hydroxybenzènes comme composé aromatique I.

**4.** Procédé selon les revendications 1 à 3, caractérisé en ce que l'on met en oeuvre des dihydroxybenzènes comme composé aromatique I.

**5.** Procédé selon les revendications 1 à 4, caractérisé en ce que l'on met en oeuvre des hydroxydes, oxydes, carbonates de métal alcalin ou leurs mélanges comme base inorganique.

**6.** Procédé selon les revendications 1 à 5, caractérisé en ce que l'on procède à la cyclisation à une température de 80 à 200°C.

**7.** Procédé selon les revendications 1 à 6, caractérisé en ce qu'on l'emploie pour la préparation de phtalocyanine non substituée exempte de métaux.